# EUROPÄISCHE PATENTSCHRIFT

(11) **EP 2 673 876 B1**
(45) Veröffentlichungstag und Bekanntmachung des Hinweises auf die Patenterteilung: **16.08.2017**
(21) Anmeldenummer: 11793435.6
(22) Anmeldetag: 07.12.2011
(51) Int. Cl.: H02P 27/08, H02J 7/00, H02J 7/14, H02P 29/00, H02P 25/02

(54) **ENERGIESPEICHEREINRICHTUNG FÜR EINE FREMDERREGTE ELEKTRISCHE MASCHINE**
ENERGY STORAGE DEVICE FOR A SEPARATELY EXCITED ELECTRICAL MACHINE
DISPOSITIF D'ACCUMULATION D'ÉNERGIE DESTINÉ À UN MOTEUR ÉLECTRIQUE À EXCITATION SÉPARÉE

(30) Priorität: 08.02.2011 DE 102011003759
(43) Veröffentlichungstag der Anmeldung: 18.12.2013
(73) Patentinhaber: Robert Bosch GmbH, 70442 Stuttgart (DE)
(72) Erfinder: FEUERSTACK, Peter, 71642 Ludwigsburg (DE); WEISSENBORN, Erik, 70374 Stuttgart (DE); KESSLER, Martin, 73527 Schwaebisch Gmuend (DE)
(86) Internationale Anmeldenummer: PCT/EP2011/072049
(87) Internationale Veröffentlichungsnummer: WO 2012/107127

(56) Entgegenhaltungen:
- EP-A1- 0 515 343
- EP-A1- 0 907 238

## Beschreibung

Die Erfindung betrifft eine Energiespeichereinrichtung für eine fremderregte elektrische Maschine sowie ein System mit einer fremderregten elektrischen Maschine, welche mit Hilfe eines steuerbaren ersten Energiespeichers gesteuert und mit elektrischer Energie versorgt wird.

### Stand der Technik

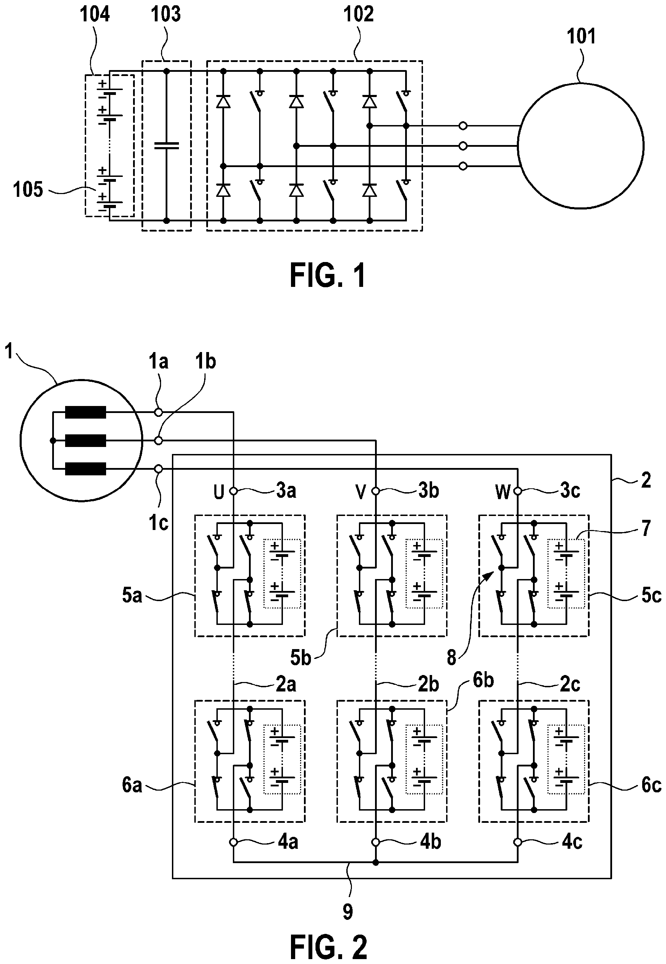

Es zeichnet sich ab, dass in Zukunft sowohl bei stationären Anwendungen, wie z.B. Windkraftanlagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren. In herkömmlichen Anwendungen wird, wie beispielsweise in Fig. 1 gezeigt, eine elektrische Maschine 101, welche z.B. als Drehfeldmaschine ausgeführt ist, über einen Umrichter in Form eines Pulswechselrichters 102 gesteuert. Kennzeichnend für derartige Systeme ist ein sogenannter Gleichspannungszwischenkreis 103, über welchen ein Energiespeicher 104, in der Regel eine Traktionsbatterie, an die Gleichspannungsseite des Pulswechselrichters 102 angeschlossen ist. Um die für eine jeweilige Anwendung gegebenen Anforderungen an Leistung und Energie erfüllen zu können, werden mehrere Batteriezellen 105 in Serie geschaltet. Da der von einem derartigen Energiespeicher 104 bereitgestellte Strom durch alle Batteriezellen 105 fließen muss und eine Batteriezelle 105 nur einen begrenzten Strom leiten kann, werden oft zusätzlich Batteriezellen parallel geschaltet, um den maximalen Strom zu erhöhen.

Die Serienschaltung mehrerer Batteriezellen bringt neben einer hohen Gesamtspannung das Problem mit sich, dass der gesamte Energiespeicher ausfällt, wenn eine einzige Batteriezelle ausfällt, weil dann kein Batteriestrom mehr fließen kann. Ein solcher Ausfall des Energiespeichers kann zu einem Ausfall des Gesamtsystems führen. Bei einem Fahrzeug kann ein Ausfall der Antriebsbatterie zum "Liegenbleiben" des Fahrzeugs führen. Bei anderen Anwendungen, wie z.B. der Rotorblattverstellung von Windkraftanlagen, kann es bei ungünstigen Rahmenbedingungen, wie z.B. starkem Wind, sogar zu sicherheitsgefährdenden Situationen kommen. Daher ist stets eine hohe Zuverlässigkeit des Energiespeichers anzustreben, wobei mit "Zuverlässigkeit" die Fähigkeit eines Systems bezeichnet wird, für eine vorgegebene Zeit fehlerfrei zu arbeiten.

In den älteren Anmeldungen DE 102010027857.2 und DE 102010027861.0 sind Batterien mit mehreren Batteriemodulsträngen beschrieben, welche direkt an eine elektrische Maschine anschließbar sind. Die Batteriemodulstränge weisen dabei eine Mehrzahl von in Serie geschalteten Batteriemodulen auf, wobei jedes Batteriemodul mindestens eine Batteriezelle und eine zugeordnete steuerbare Koppeleinheit aufweist, welche es erlaubt in Abhängigkeit von Steuersignalen den jeweiligen Batteriemodulstrang zu unterbrechen oder die jeweils zugeordnete mindestens eine Batteriezelle zu überbrücken oder die jeweils zugeordnete mindestens eine Batteriezelle in den jeweiligen Batteriemodulstrang zu schalten. Durch geeignete Ansteuerung der Koppeleinheiten, z.B. mit Hilfe von Pulsweitenmodulation, können auch geeignete Phasensignale zur Steuerung der elektrischen Maschine bereitgestellt werden, so dass auf einen separaten Pulswechselrichter verzichtet werden kann. Der zur Steuerung der elektrischen Maschine erforderliche Pulswechselrichter ist damit sozusagen in die Batterie integriert. Zum Zwecke der Offenbarung werden diese beiden älteren Anmeldungen vollumfänglich in die vorliegende Anmeldung einbezogen.

Im Gegensatz zu konventionellen Systemen steht am Ausgang des Batteriesystems keine konstante Gleichspannung zur Verfügung, die beispielsweise zur Speisung einer Erregerwicklung einer fremderregten elektrischen Maschine eingesetzt werden kann.

EP 0 907 238 A1 offenbart eine Schaltungsanordnung zur Ansteuerung eines dreiphasigen Elektromotors. Jede der Phasen wird mit einer PWM-modulierten Spannung aus einer kaskadierbaren Batteriezellenanordnung gespeist. Die Batteriezellen können dabei mittels einer Ladeschaltung aufgeladen werden, wobei die durch die Ladeschaltung bereitgestellte Spannung mittels eines PWM-Konverters an die Batteriespannung angepasst werden kann.

### Offenbarung der Erfindung

Die vorliegende Erfindung schafft gemäß einer Ausführungsform eine Energiespeichereinrichtung mit den Merkmalen des unabhängigen Patenanspruchs 1.

Weiterhin schafft die vorliegende Erfindung gemäß einer weiteren Ausführungsform ein System mit einer fremderregten elektrischen Maschine und einem steuerbaren Energiespeicher.

### Vorteile der Erfindung

Eine Idee der vorliegenden Erfindung ist es, eine Erregerwicklung einer fremderregten elektrischen Maschine mithilfe eines separaten Energieversorgungsstrangs in einem steuerbaren Energiespeicher zu speisen. Der separate Energieversorgungsstrang kann an den entsprechenden Versorgungszweck angepasst werden. Durch den geringeren Leistungsbedarf zur Speisung der Erregerwicklung kann der separate Energieversorgungsstrang mit weniger und/oder kleineren Energieversorgungsmodulen ausgestaltet werden, so dass der Platzbedarf sinkt. Außerdem kann der separate Energieversorgungsstrang gegenüber den übrigen Energieversorgungszweigen mit Koppeleinrichtungen unterschiedlicher Schaltungstopologie ausgestaltet werden, wodurch Leistungsverluste minimiert werden können.

Gemäß einer vorteilhaften Ausführungsform umfasst eine erfindungsgemäße Energiespeichereinrichtung in dem mindestens einen ersten Energieversorgungszweig und dem zweiten Energieversorgungszweig jeweils mindestens zwei in Reihe geschaltete Energiespeichermodule, welche jeweils mindestens eine elektrische Energiespeicherzelle mit einer zugeordneten steuerbaren Koppeleinheit umfassen.

Vorteilhafterweise können die Koppeleinheiten der Energiespeichermodule des mindestens einen ersten Energieversorgungszweiges Schaltelemente in Vollbrückenschaltung, und die Koppeleinheiten der Energiespeichermodule des zweiten Energieversorgungszweiges Schaltelemente in Halbbrückenschaltung umfassen. In diesem Ausführungsbeispiel kann die erfindungsgemäße Energiespeichereinrichtung dazu ausgelegt sein, eine n-phasige Drehstrom-Synchronmaschine mit Energie zu versorgen.

Alternativ können die Koppeleinheiten der Energiespeichermodule des mindestens einen ersten Energieversorgungszweiges Schaltelemente in Halbbrückenschaltung, und die Koppeleinheiten der Energiespeichermodule des zweiten Energieversorgungszweiges Schaltelemente in Vollbrückenschaltung umfassen. In diesem Ausführungsbeispiel kann die erfindungsgemäße Energiespeichereinrichtung dazu ausgelegt ist, eine fremderregte Gleichstrommaschine mit Energie zu versorgen.

Dabei kann es vorzugsweise vorgesehen sein, die jeweils dritten Anschlüsse über eine gemeinsame Bezugsschiene miteinander zu verbinden. Dies spart vorteilhafterweise Anschlüsse der Energiespeichereinrichtung ein.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines Systems mit elektrischer Maschine aus dem Stand der Technik,
- Fig. 2: eine schematische Darstellung eines Systems mit einer elektrischen Maschine und einem steuerbaren Energiespeicher,
- Fig. 3: eine schematische Darstellung eines Systems mit einer dreiphasigen fremderregten Drehstrom-Synchronmaschine und einer steuerbaren Energiespeichereinrichtung gemäß einer Ausführungsform der vorliegenden Erfindung, und
- Fig. 4: eine schematische Darstellung eines Systems mit einer fremderregten Gleichstrommaschine und einer steuerbaren Energiespeichereinrichtung gemäß einer weiteren Ausführungsform der vorliegenden Erfindung.

Fig. 2 zeigt ein System mit einer elektrischen Maschine 1 und einem steuerbaren Energiespeicher 2. Die elektrische Maschine 1 ist beispielhaft als dreiphasige elektrische Maschine 1 dargestellt, die über einen steuerbaren ersten Energiespeicher 2 mit Energie versorgt wird. Der steuerbare erste Energiespeicher 2 umfasst drei Energieversorgungszweige 2a, 2b, 2c, welche einerseits mit einem Bezugspotential 9 (Bezugsschiene), welches in den dargestellten Ausführungsformen in Bezug auf Phasen U, V, W der elektrischen Maschine 1 ein mittleres Potential führt, über Anschlüsse 4a, 4b, 4c, und andererseits jeweils mit den einzelnen Phasen U, V, W der elektrischen Maschine 1 verbunden sind. Dabei ist ein Anschluss 3a eines ersten Energieversorgungszweiges 2a mit einem ersten Phasenanschluss 1a der elektrischen Maschine 1, ein Anschluss 3b eines zweiten Energieversorgungszweiges 2b mit einem zweiten Phasenanschluss 1 b der elektrischen Maschine 1, und ein Anschluss 3c eines dritten Energieversorgungszweiges 2c mit einem dritten Phasenanschluss 1c der elektrischen Maschine 1 gekoppelt. Jeder der Energieversorgungszweige 2a, 2b, 2c weist in Reihe geschaltete Energiespeichermodule 5a, 6a bzw. 5b, 6b bzw. 5c, 6c auf. Beispielhaft beträgt die Anzahl der Energiespeichermodule pro Energieversorgungszweig 2a, 2b, 2c in Fig. 2 zwei, wobei jedoch jede andere Anzahl von Energiespeichermodulen ebenso möglich ist.

Die Energiespeichermodule 5a, 5b, 5c, 6a, 6b, 6c wiederum umfassen jeweils mehrere in Reihe geschaltete elektrische Energiespeicherzellen in einer Energiespeicherzelleneinrichtung 7. Dabei beträgt die Anzahl der Energiespeicherzellen in einer Energiespeicherzelleneinrichtung 7 in Fig. 2 beispielhaft zwei, wobei jedoch jede andere Zahl von Energiespeicherzellen ebenso möglich ist. Die Energiespeichermodule 5a, 5b, 5c, 6a, 6b, 6c umfassen des Weiteren jeweils eine Koppeleinheit 8, welche den Energiespeicherzellen 7 des jeweiligen Energiespeichermoduls 5a, 5b, 5c, 6a, 6b, 6c zugeordnet ist. Aus Gründen der Übersichtlichkeit sind die Koppeleinheiten und die Energiespeicherzelleneinrichtungen nur in dem Energiespeichermodul 5c mit Bezugszeichen versehen. Es versteht sich jedoch, dass die Energiespeichermodule 5a, 5b, 6a, 6b, 6c ähnliche Koppeleinheiten und Energiespeicherzelleneinrichtungen umfassen können.

In den dargestellten Ausführungsvarianten werden die Koppeleinheiten 8 jeweils durch vier steuerbare Schaltelemente gebildet, welche in Form einer Vollbrücke verschaltet sind. Die Schaltelemente können dabei als Leistungshalbleiterschalter, z.B. in Form von IGBTs (Insulated Gate Bipolar Transistors) oder als MOSFETs (Metal Oxide Semiconductor Field-Effect Transistors), ausgeführt sein. Es kann jedoch auch möglich sein, die Koppeleinheiten 8 jeweils als Halbbrückenschaltung mit lediglich jeweils zwei Schaltelementen auszubilden. Halbbrückenschaltungen bieten den Vorteil, aufgrund der geringeren Schaltelementzahl geringere Leistungverluste aufzuweisen, haben jedoch den Nachteil, dass die Spannung an den Ausgangsanschlüssen 3a, 3b, 3c in den Energieversorgungszweigen nicht umgepolt werden kann.

Im beispielhaft dargestellten Fall einer Vollbrückenschaltung ermöglichen es die Koppeleinheiten 8, den jeweiligen Energieversorgungszweig 2a, 2b, 2c durch Öffnen aller Schaltelemente einer Koppeleinheit 8 zu unterbrechen. Alternativ können die Energiespeicherzellen 7 durch Schließen von jeweils zwei der Schaltelemente einer Koppeleinheit 8 entweder überbrückt oder in den jeweiligen Energieversorgungszweig 2a, 2b, 2c geschaltet werden.

Die Gesamt-Ausgangsspannungen der Energieversorgungszweige 2a, 2b, 2c werden durch den jeweiligen Schaltzustand der steuerbaren Schaltelemente der Koppeleinheiten 8 bestimmt und können stufig eingestellt werden. Die Stufung ergibt sich dabei in Abhängigkeit von der Spannung der einzelnen Energiespeichermodule 5a, 5b, 5c, 6a, 6b, 6c.

Die Koppeleinheiten 8 erlauben es damit, die Phasen U, V, W der elektrischen Maschine 1 entweder gegen ein hohes Bezugspotential oder ein niedriges Bezugspotential zu schalten und können insofern auch die Funktion eines bekannten Wechselrichters erfüllen. Damit können Leistung und Betriebsart der elektrischen Maschine 1 bei geeigneter Ansteuerung der Koppeleinheiten 8 durch den steuerbaren ersten Energiespeicher 2 gesteuert werden. Der steuerbare erste Energiespeicher 2 erfüllt also insofern eine Doppelfunktion, da er einerseits der elektrischen Energieversorgung andererseits aber auch der Steuerung der elektrischen Maschine 1 dient.

Die elektrische Maschine 1 weist Statorwicklungen auf, die in bekannter Weise in Sternschaltung miteinander verschaltet sind. Die elektrische Maschine 1 ist in den dargestellten Ausführungsbeispielen als dreiphasige Drehstrommaschine ausgeführt, kann aber auch weniger oder mehr als drei Phasen aufweisen. Nach der Phasenanzahl der elektrischen Maschine richtet sich dementsprechend die Anzahl der Energieversorgungszweige 2a, 2b, 2c in dem steuerbaren ersten Energiespeicher 2.

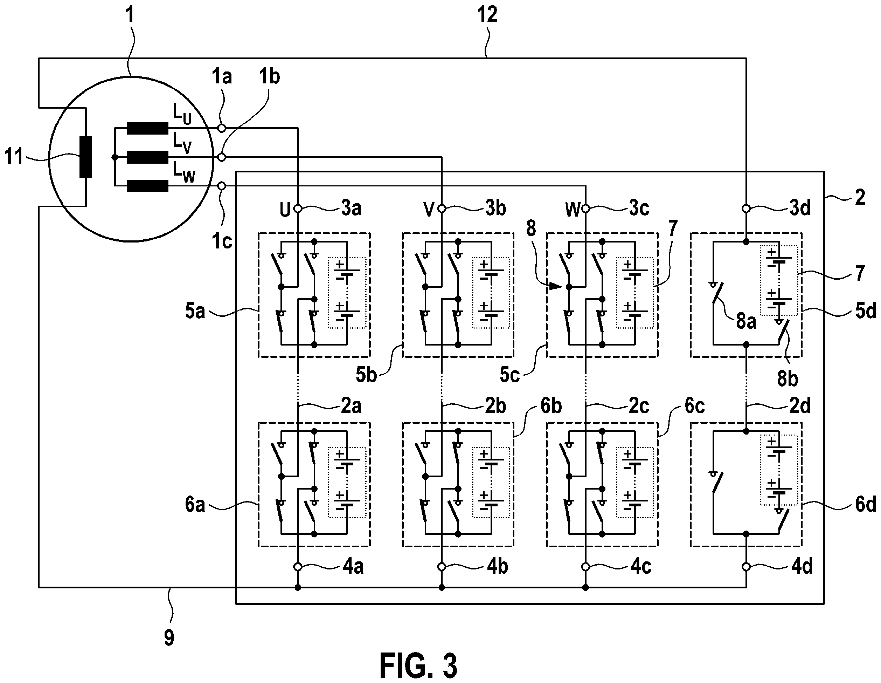

Fig. 3 eine schematische Darstellung eines Systems mit einer dreiphasigen fremderregten Drehstrom-Synchronmaschine 1 und einer steuerbaren Energiespeichereinrichtung 2 gemäß einer Ausführungsform der vorliegenden Erfindung. Das in Fig. 3 dargestellte System unterscheidet sich von dem in Fig. 2 dargestellten System lediglich darin, dass die elektrische Maschine 1 eine Erregerwicklung 11 aufweist, die über eine erste Versorgungsleitung 12 mit einem separaten Energieversorgungszweig 2d des steuerbaren Energiespeichers 2, und über die Bezugsschiene 9 jeweils mit den Anschlüssen 4a, 4b, 4c und dem Anschluss 4d des separaten Energieversorgungszweigs 2d des steuerbaren Energiespeichers 2 verbunden ist.

Der separate Energieversorgungszweig 2d weist ebenso wie die Energieversorgungszweige 2a, 2b, 2c Energiespeichermodule 5d, 6d auf, welche über in Reihe geschaltete Energiespeicherzellen 7 und Koppeleinheiten 8a, 8b verfügen. Im Ausführungsbeispiel nach Fig. 3 umfassen die Koppeleinheiten 8a, 8b zwei Schaltelemente in Halbbrückenschaltung, welche die Energiespeicherzellen 7 entweder überbrücken oder in den Energieversorgungszweig 2d schalten können.

Der separate Energieversorgungszweig 2d ist über einen Anschluss 4d mit der Bezugsschiene 9 des steuerbaren Energiespeichers 2, und über einen Anschluss 3d mit der Erregerwicklung der elektrischen Maschine 1 verbunden. Mithilfe des separaten Energieversorgungszweiges 2d kann ein variabler Strom durch die Erregerwicklung 11 geleitet werden, so dass ein variables Erregerfeld in der elektrischen Maschine 1 erzeugt werden kann.

Im vorliegenden Ausführungsbeispiel gemäß Fig. 3 mit der Halbbrückenschaltung der Koppeleinheiten 8 ist es zwar nicht möglich, eine Umpolung des Stroms durch die Erregerwicklung 11 zu realisieren, jedoch sinken durch die geringere Zahl an notwendigen Schaltelementen in einer Halbbrückenschaltung der Koppeleinheiten 8 die Leistungsverluste an den Schaltelementen dieser Energiespeichermodule 5d, 6d. Alternativ können die Energiespeichermodule 5d, 6d des steuerbaren Energiespeichers 2 auch über Koppeleinheiten in Vollbrückenschaltung verfügen, die ähnlich wie die Koppeleinheiten 8 der Energiespeichermodule 5a, 5b, 5c, 6a, 6b, 6c ausgestaltet sind. In diesem Fall kann eine Umpolung des Stroms durch die Erregerwicklung 11 durch entsprechende Ansteuerung der Koppeleinheiten 8 erreicht werden.

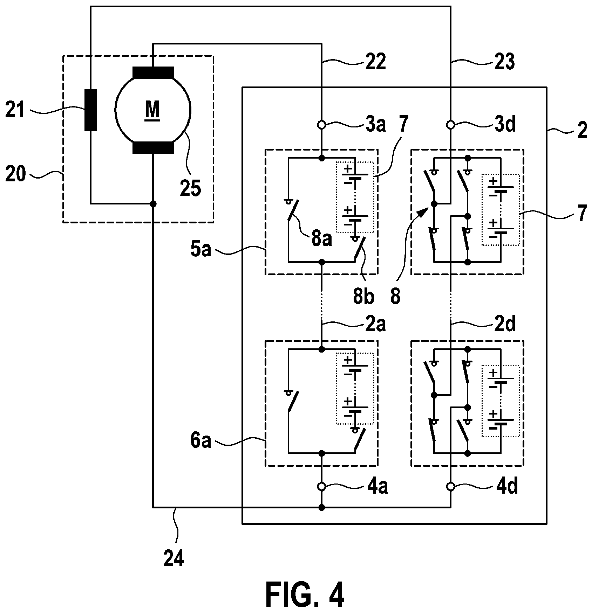

Fig. 4 zeigt eine schematische Darstellung eines Systems mit einer fremderregten Gleichstrommaschine 20 und einer steuerbaren Energiespeichereinrichtung 2 gemäß einer weiteren Ausführungsform der vorliegenden Erfindung. Die steuerbare Energiespeichereinrichtung 2 weist im Ausführungsbeispiel der Fig. 4 einen Energieversorgungszweig 2a auf, welcher über zwei in Reihe geschaltete Energieversorgungsmodule 5a, 6a verfügt. Die Energieversorgungsmodule 5a, 6a umfassen dabei Energiespeicherzellen 7, die Koppeleinheiten 8a, 8b zugeordnet sind. Die Koppeleinheiten 8a, 8b der Energieversorgungsmodule 5a, 6a können Schaltelemente in Halbbrückenschaltung umfassen, wie beispielhaft in Fig. 4 gezeigt. Die steuerbare Energiespeichereinrichtung 2 weist ferner einen separaten Energieversorgungszweig 2d auf, welcher ebenfalls über zwei in Reihe geschaltete Energieversorgungsmodule 5d, 6d verfügt. Die Energieversorgungsmodule 5d, 6d umfassen Energiespeicherzellen 7, die Koppeleinheiten 8 zugeordnet sind. Die Koppeleinheiten 8 der Energieversorgungsmodule 5d, 6d sind dabei mit Schaltelementen in Vollbrückenschaltung realisiert.

Der Energieversorgungszweig 2a ist über einen ersten Anschluss 3a mit einer Anschlussleitung 22 der Statoreinrichtung 25 der Gleichstrommaschine 20 verbunden, während der Energieversorgungszweig 2d über einen zweiten Anschluss 3d mit einer Anschlussleitung 23 der Erregerwicklung 21 der Gleichstrommaschine 20 verbunden ist. Über den Energieversorgungszweig 2a kann die Gleichstrommaschine 20 mit Energie versorgt werden. Über den Energieversorgungszweig 2d kann ein Strom zum Erzeugen eines Erregerfeldes der Gleichstrommaschine 20 durch die Erregerwicklung 21 geleitet werden.

Im Ausführungsbeispiel der Fig. 4 kann das Erregerfeld mithilfe der Vollbrückenschaltung der Koppeleinheiten 8 in dem Energieversorgungszweig 2d umgepolt werden. Dadurch ist es möglich, ohne eine Stromrichtungsumkehr in der Statoreinrichtung 25 eine Drehrichtung der Gleichstrommaschine 20 herbeizuführen. Da die in dem Energieversorgungszweig 2a auftretenden Stromstärken üblicherweise höher als die in dem Energieversorgungszweig 2a auftretenden Stromstärken sind, kann zur Minimierung der Leistungsverluste, wie in Fig. 4 gezeigt, der Energieversorgungszweig 2a mit Energieversorgungsmodulen 5a, 6a in Halbbrückentopologie realisiert werden. Es ist jedoch ebenso möglich, die Koppeleinheiten der Energieversorgungsmodule 5a, 6a ebenfalls in Vollbrückenschaltung auszugestalten, und die Koppeleinheiten der Energieversorgungsmodule 5d, 6d in Halbbrückenschaltung. Ebenso ist die Anzahl der Energieversorgungsmodule 5a, 6a bzw. 5d, 6d nicht auf zwei beschränkt, sondern es ist jede beliebige Anzahl an Energieversorgungsmodulen pro Energieversorgungszweig möglich. Insbesondere kann es möglich sein, weniger Energieversorgungsmodule in dem Energieversorgungszweig 2d als in dem Energieversorgungszweig 2a vorzusehen.

## Patentansprüche

1. Energiespeichereinrichtung (2), mit:
mindestens einem ersten Energieversorgungszweig (2a, 2b, 2c), welcher dazu ausgelegt ist, eine fremderregte elektrische Maschine (1) über einen ersten Anschluss (3a, 3b, 3c) mit Energie zu versorgen; und
einem zweiten Energieversorgungszweig (2d), welcher parallel zu dem mindestens einen ersten Energieversorgungszweig (2a, 2b, 2c) geschaltet ist, und welcher dazu ausgelegt ist, eine Erregerwicklung (11) der fremderregten elektrischen Maschine (1) über einen zweiten Anschluss (3d) mit Strom zu versorgen,
wobei der mindestens eine erste Energieversorgungszweig (2a, 2b, 2c) und der zweite Energieversorgungszweig (2d) über jeweils einen dritten Anschluss (4a, 4b, 4c; 4d) mit der Erregerwicklung verbunden sind,
wobei der mindestens eine erste Energieversorgungszweig (2a, 2b, 2c) und der zweite Energieversorgungszweig (2d) jeweils mindestens zwei in Reihe geschaltete Energiespeichermodule (5a, 5b, 5c, 6a, 6b, 6c; 5d, 6d) aufweisen, welche jeweils mindestens eine elektrische Energiespeicherzelle (7) mit einer zugeordneten steuerbaren Koppeleinheit (8) umfassen.

2. Energiespeichereinrichtung (2) nach Anspruch 1, wobei die Koppeleinheiten (8) der Energiespeichermodule (5a, 5b, 5c, 6a, 6b, 6c) des mindestens einen ersten Energieversorgungszweiges (2a, 2b, 2c) Schaltelemente in Vollbrückenschaltung umfassen.

3. Energiespeichereinrichtung (2) nach Anspruch 2, wobei die Koppeleinheiten (8) der Energiespeichermodule (5d, 6d) des zweiten Energieversorgungszweiges (2d) Schaltelemente in Halbbrückenschaltung umfassen, und wobei die Energiespeichereinrichtung (2) dazu ausgelegt ist, eine n-phasige Drehstrom-Synchronmaschine mit Energie zu versorgen.

4. Energiespeichereinrichtung (2) nach Anspruch 1, wobei die Koppeleinheiten (8) der Energiespeichermodule (5a, 5b, 5c, 6a, 6b, 6c) des mindestens einen ersten Energieversorgungszweiges (2a, 2b, 2c) Schaltelemente in Halbbrückenschaltung umfassen.

5. Energiespeichereinrichtung (2) nach Anspruch 4, wobei die Koppeleinheiten (8) der Energiespeichermodule (5d, 6d) des zweiten Energieversorgungszweiges (2d) Schaltelemente in Vollbrückenschaltung umfassen, und wobei die Energiespeichereinrichtung (2) dazu ausgelegt ist, eine fremderregte Gleichstrommaschine mit Energie zu versorgen.

6. Energiespeichereinrichtung (2) nach einem der Ansprüche 1 bis 6, wobei der mindestens eine erste Energieversorgungszweiges (2a, 2b, 2c) und der zweiten Energieversorgungszweiges (2d) über jeweils den dritten Anschluss (4a, 4b, 4c; 4d) mit einer gemeinsamen Bezugsschiene (9) verbunden sind.

7. System, mit:
einer fremderregten elektrischen Maschine (1; 20); und
einer steuerbaren Energiespeichereinrichtung (2) nach einem der Ansprüche 1 bis 5.

8. System nach Anspruch 7, wobei die fremderregte elektrische Maschine (1) eine n-phasige Drehstrom-Synchronmaschine ist, mit n ≥1.

9. System nach Anspruch 7, wobei die fremderregte elektrische Maschine (20) eine fremderregte Gleichstrommaschine ist.

## Claims

1. Energy storage device (2) having
- at least a first energy supply branch (2a, 2b, 2c) that is embodied for the purpose of supplying a separately excited electrical machine (1) with energy by way of a first connection (3a, 3b, 3c); and
- a second energy supply branch (2d) that is connected in parallel to the at least one first energy supply branch (2a, 2b, 2c) and that is embodied for the purpose of supplying an exciter winding (11) of the separately excited electrical machine (1) with current by way of a second connection (3d),
wherein the at least one first energy supply branch (2a, 2b, 2c) and the second energy supply branch (2d) are connected by way of in each case a third connection (4a, 4b, 4c; 4d) to the exciter winding,
wherein the at least one first energy supply branch (2a, 2b, 2c) and the second energy supply branch (2d) comprise in each case at least two series-connected energy storage modules (5a, 5b, 5c, 6a, 6b, 6c; 5d, 6d) that comprise in each case at least one electrical energy storage cell (7) having an allocated controllable coupling unit (8).

2. Energy storage device (2) according to Claim 1, wherein the coupling units (8) of the energy storage modules (5a, 5b, 5c, 6a, 6b, 6c) of the at least one first energy supply branch (2a, 2b, 2c) comprise switch elements in a full-bridge arrangement.

3. Energy storage device (2) according to Claim 2, wherein the coupling units (8) of the energy storage modules (5d, 6d) of the second energy supply branch (2d) comprise switch elements in a half-bridge arrangement, and wherein the energy storage device (2) is embodied for the purpose of supplying an n-phase synchronous AC machine with energy.

4. Energy storage device (2) according to Claim 1, wherein the coupling units (8) of the energy storage modules (5a, 5b, 5c, 6a, 6b, 6c) of the at least one first energy supply branch (2a, 2b, 2c) comprise switch elements in a half-bridge arrangement.

5. Energy storage device (2) according to Claim 4, wherein the coupling units (8) of the energy storage modules (5d, 6d) of the second energy supply branch (2d) comprise switch elements in a full-bridge arrangement, and wherein the energy storage device (2) is embodied for the purpose of supplying a separately excited DC machine with energy.

6. Energy storage device (2) according to any one of Claims 1 to 6, wherein the at least one first energy supply branch (2a, 2b, 2c) and the second energy supply branch (2d) are connected by way of in each case the third connection (4a, 4b, 4c; 4d) to a common reference rail (9).

7. System comprising:
a separately excited electrical machine (1; 20); and
a controllable energy storage device (2) according to any one of Claims 1 to 5.

8. System according to Claim 7, wherein the separately excited electrical machine (1) is an n-phase synchronous AC machine where n ≥ 1.

9. System according to Claim 7, wherein the separately excited electrical machine (20) is a separately excited DC machine.

## Revendications

1. Dispositif d'accumulation d'énergie (2), comprenant:
au moins une première branche d'alimentation en énergie (2a, 2b, 2c) étudiée pour alimenter en énergie une machine électrique à excitation séparée (1) via une première connexion (3a, 3b, 3c) ; et
une deuxième branche d'alimentation en énergie (2d) connectée parallèlement à l'au moins une première branche d'alimentation en énergie (2a, 2b, 2c) et étudiée pour alimenter en courant un enroulement d'excitation (11) de la machine électrique à excitation séparée (1) via une deuxième connexion (3d),
dans lequel l'au moins une première branche d'alimentation en énergie (2a, 2b, 2c) et la deuxième branche d'alimentation en énergie (2d) sont reliées, via respectivement une troisième connexion (4a, 4b, 4c ; 4d), à l'enroulement d'excitation,
dans lequel l'au moins une première branche d'alimentation en énergie (2a, 2b, 2c) et la deuxième branche d'alimentation en énergie (2d) présentent respectivement au moins deux modules d'accumulation d'énergie (5a, 5b, 5c, 6a, 6b, 6c ; 5d, 6d) connectés en série comprenant respectivement au moins un élément d'accumulation d'énergie électrique (7) avec une unité de couplage (8) associée pouvant être commandée.

2. Dispositif d'accumulation d'énergie (2) selon la revendication 1, dans lequel les unités de couplage (8) des modules d'accumulation d'énergie (5a, 5b, 5c, 6a, 6b, 6c) de l'au moins une première branche d'alimentation en énergie (2a, 2b, 2c) comprennent des éléments logiques en circuit en pont complet.

3. Dispositif d'accumulation d'énergie (2) selon la revendication 2, dans lequel les unités de couplage (8) des modules d'accumulation d'énergie (5d, 6d) de la deuxième branche d'alimentation en énergie (2d) comprennent des éléments logiques en circuit en demi-pont, et dans lequel le dispositif d'accumulation d'énergie (2) est étudié pour alimenter en énergie une machine synchrone à courant triphasé à n phases.

4. Dispositif d'accumulation d'énergie (2) selon la revendication 1, dans lequel les unités de couplage (8) des modules d'accumulation d'énergie (5a, 5b, 5c, 6a, 6b, 6c) de l'au moins une première branche d'alimentation en énergie (2a, 2b, 2c) comprennent des éléments logiques en circuit en demi-pont.

5. Dispositif d'accumulation d'énergie (2) selon la revendication 4, dans lequel les unités de couplage (8) des modules d'accumulation d'énergie (5d, 6d) de la deuxième branche d'alimentation en énergie (2d) comprennent des éléments logiques en circuit en pont complet, et dans lequel le dispositif d'accumulation d'énergie (2) est étudié pour alimenter en énergie une machine à courant continu à excitation séparée.

6. Dispositif d'accumulation d'énergie (2) selon l'une des revendications 1 à 6, dans lequel l'au moins une première branche d'alimentation en énergie (2a, 2b, 2c) et la deuxième branche d'alimentation en énergie (2d) sont reliées respectivement via la troisième connexion (4a, 4b, 4c ; 4d) à un rail de référence commun (9).

7. Système, comprenant:
une machine électrique à excitation séparée (1 ; 20) ; et
un dispositif d'accumulation d'énergie (2) pouvant être commandé selon l'une des revendications 1 à 5.

8. Système selon la revendication 7, dans lequel la machine électrique à excitation séparée (1) est une machine synchrone à courant triphasé à n phases, avec n≥1.

9. Système selon la revendication 7, dans lequel la machine électrique à excitation séparée (20) est une machine à courant continu à excitation séparée.
